(19) Europäisches Patentamt

European Patent Office

Office européen des brevets

(11) Veröffentlichungsnummer: **0 605 391 A2**

## (12) EUROPÄISCHE PATENTANMELDUNG

(21) Anmeldenummer: **94101353.4**

(51) Int. Cl.5: **G01J 3/453**, G01J 3/447

(22) Anmeldetag: **15.01.90**

Diese Anmeldung ist am 29 - 01 - 1994 als Teilanmeldung zu der unter INID-Kode 60 erwähnten Anmeldung eingereicht worden.

(30) Priorität: **03.03.89 CH 803/89**

(43) Veröffentlichungstag der Anmeldung:
**06.07.94 Patentblatt 94/27**

(60) Veröffentlichungsnummer der früheren Anmeldung nach Art. 76 EPÜ: **0 427 797**

(84) Benannte Vertragsstaaten:
**AT BE CH DE DK ES FR GB IT LI LU NL SE**

(71) Anmelder: **BÜHLER AG**

**CH-9240 Uzwil(CH)**
Anmelder: **Bran + Lübbe GmbH**
**Werkstrasse 4**
**D-22844 Norderstedt(DE)**

(72) Erfinder: **Wagner, Heinz**
**Kleinalbis 33**
**CH-8045 Zürich(CH)**
Erfinder: **Labhart, Martin**
**Lindenbergstrasse 12**
**CH-8630 Rüti(CH)**
Erfinder: **Glaus, Ulrich**
**Grossensteinstrasse 1**
**CH-8620 Wetzikon(CH)**

(74) Vertreter: **Lusuardi, Werther Giovanni, Dr.**
**Dr. Lusuardi AG,**
**Kreuzbühlstrasse 8**
**CH-8008 Zürich (CH)**

(54) **Polarisationsinterferometer.**

(57) Das Polarisationsinterferometer weist eine Lichtquelle (1), einen Kollimator (2), ein erstes polarisierendes Element (3), ein System von doppelbrechenden Elementen (4,5,6) und ein zweites polarisierendes Element (7) auf, welches das aus dem doppelbrechenden Element (4,5,6) austretende Licht polarisiert und einem Photonendetektor (8) zuführt.

Das doppelbrechende Element (4,5,6) besteht dabei aus zwei, längs entgegengesetzter Seitenflächen gegeneinander verschiebbar angeordneten, sich zu einem Quader ergänzenden, optischen Keile (5,6) und einer als Kompensator dienenden doppelbrechenden planparallelen Platte (4).

Die optische Achse des Kompensators (4) ist gegenüber derjenigen der beiden Keile (5,6) in der Ebene senkrecht zum Lichtstrahl um einen endlichen Winkel verdreht, wobei die optischen Achsen der beiden Keile (5,6) übereinstimmen.

Die optischen Achsen der beiden Polarisatoren (3,7) stehen senkrecht oder parallel zueinander und sind nicht parallel zu den Achsen der beiden Keile (5,6) des doppelbrechenden Elementes (4,5,6) ausgerichtet.

Ein monochromatischer Lichtstrahl (9) wird in den von der Lichtquelle (1) erzeugten parallen Lichtstrahl eingekoppelt und nach Durchquerung mindestens des doppelbrechenden Elementes (4,5,6) wieder ausgekoppelt und auf einen Photonendetektor (13) geführt.

EP 0 605 391 A2

Fig. 1

Die Erfindung bezieht sich auf ein Polarisationsinterferometer gemäss dem Oberbegriff des Anspruchs 1 und dessen Verwendung.

Das wichtigste und meistverwendete Interferometer ist das Michelsonsche mit seinen vielen Varianten. Das Licht einer meist monochromatischen Lichtquelle wird an einer halbdurchlässigen, verspiegelten Fläche einer optischen Teilungsplatte in zwei Teilbündel zerlegt. Nach deren Reflexion an zwei Spiegeln vereinigt die Teilungsplatte beide wieder zu einem einzigen Lichtbündel. Diese Vereinigung führt zu Interferenzstreifen, deren Krümmung oder Verschiebung ein Mass für die Verschiedenheit der optischen Lichtwege zwischen den beiden Teilbündeln ist.

Aus der FR-A-2 340 540 ANVAR ist auch bereits ein Polarisationsinterferometer bekannt, welcher eine Lichtquelle, einen Polarisator, ein Interferometer, bei dem der in einem doppelbrechenden Element erzeugte ordentliche und ausserordentliche Lichtstrahl miteinander interferieren können, einen Analysator, eine Anzeigevorrichtung für die Interferenzstreifen und einen Photonendetektor umfasst. Mit diesem bekannten Gerät ist allerdings keine weitere Verarbeitung des erhaltenen Interferogramms möglich; insbesondere auch keine Transformation zu einem aussagefähigen Spektrogramm.

Die bekannten Interferometer können für eine grössere Anzahl von Aufgaben eingesetzt werden, beispielsweise für:
- Das Messen der spektralen Verteilung des Lichts;
- das Messen der Lichtgeschwindigkeit;
- das Messen der Fehler von optischen Platten, Linsen und ganzen Objektiven;
- das unmittelbare Messen von Längen und Längenunterschieden;
- das Messen von Schlieren und Strömungen.

Die bekannten Interferometer weisen jedoch folgende Nachteile auf:
- Zur Messung der spektralen Verteilung können sie üblicherweise nur für Licht bis ins mittlere Infrarot verwendet werden, für kurzwelligeres Licht muss ein hoher apparativer Aufwand getrieben werden;
- die Planarität der verwendeten optischen Bauteile muss sehr hoch sein; und
- in einem 2-Strahl-Interferometer ist eine präzise Führung des bewegten Spiegels notwendig.

Im Dokument APPLIED OPTICS AND ENGINEERING, ed. R.Kingslake, vol. 1, Academic Press, Inc. (London) LTD., 1965, Seiten 340 und 341 ist ein Retardator, in Form des sogenannten Babinet-Kompensators zeichnerisch dargestellt und im Text dahingehend kommentiert, dass statt des Babinetkompensators auch ein sogenannter SOLEIL-Kompensator eingesetzt werden kann, mit welchem ein Lichtstrahl polarisiert werden kann.

Im weiteren wird im Lexikon der Optik (Hrsg.: Heinz Haberkorn), Leipzig 1988, Seite 281 ein Polarisationsmikroskop offenbart, welches die Betrachtung von Interferenzfiguren gestattet.

Hier will die Erfindung Abhilfe schaffen. Der Erfindung liegt die Aufgabe zugrunde, ein Polarisationsinterferometer zu schaffen, welches gegenüber herkömmlichen Geräten:
- den Spektralbereich des Polarisationsinterferometers bei gegenüber der bekannten Michelsonschen Anordnung gleichbleibendem Aufwand um das Hundertfache vergrössert; und
- durch das der Erfindung zugrundeliegende Einstrahl-Interferometer eine robuste, gegenüber Vibrationen relativ unempfindliche Anordnung erlaubt.

Die Erfindung löst die gestellte Aufgabe mit einem Polarisationsinterferometer, welches die Merkmale des Anspruchs 1 aufweist.

Die durch die Erfindung erreichten Vorteile sind im wesentlichen darin zu sehen, dass dank des erfindungsgemässen Polarisationsinterferometers mit sämtlichen bekannten und für die Michelsonsche Interferometrie benützen Arten der Messung der Verschiebungslänge des bewegten gegenüber dem festgehaltenen Spiegel eine Erweiterung des messbaren Spektralbereiches um mindestens zwei Zehnerpotenzen erreicht werden kann. Im weiteren müssen an die im erfindungsgemässen Polarisationsinterferometer verwendeten optischen Bauteile viel weniger hohe Ansprüche in Bezug auf Präzision und Planarität gestellt werden.

Im Gegensatz zum Zweistrahl-Interferometer werden beim erfindungsgemässen Polarisationsinterferometer die zwei senkrecht zueinander polarisierten Teile ein und desselben Lichtstrahls miteinander zur Interferenz gebracht. Dies hat den Vorteil, dass die räumlich laterale Interferenz auch bei geometrischen Abbildungsfehlern (z.B. durch mechanische Vibrationen oder mangelhafte Antriebe und Führungen) vollständig erhalten bleibt, da beide Polarisationskomponenten an den gleichen Ort abgebildet werden. Dies erlaubt insbesondere eine wesentlich höhere Geschwindigkeit bei der Aufnahme des Interferogramms.

Ein besonderer Vorteil der Erfindung liegt darin begründet, dass mittels der Interferenz einer monochromatischen Lichtquelle, die Verschiebungslänge x direkt durch die Anordnung gemessen werden kann.

Das erfindungsgemässe Polarisationsinterferometer eignet sich neben den bereits erwähnten Anwendungen, wegen seiner mechanischen Unempfindlichkeit auf Umgebungseinflüsse und der geringen Messzeit, insbesondere für die Routineanalytik in Labor und Industriebetrieb, z.B. lässt sich durch Aufnahme eines Spektrums im nahen IR-Wellenlängenbereich die Identität von Nitrobenzol und das Vorhandensein von möglichen Verunreinigungen rasch und zuverlässig bestimmen.

Eine weitere bevorzugte Verwendung des erfindungsgemässen Polarisationsinterferometers ist diejenige als Spektrometer im nahen IR und im sichtbaren Wellenlängenbereich.

Verschiedene Ausführungsbeispiele der Erfindung, welche zugleich das Funktionsprinzip erläutern, sind in den Zeichnungen dargestellt und werden im folgenden näher beschrieben.

Fig. 1 stellt eine schematische Anordnung eines erfindungsgemässen Polarisationsinterferometers.

Fig. 2 stellt eine schematische Anordnung eines erfindungsgemässen Polarisationsinterferometers dar, bei der die Verschiebungslänge x mittels der Interferenz monochromatischer Lichtstrahlen, einer durch die Anordnung und einer ausserhalb, gemessen wird.

Fig. 3 stellt eine schematische Anordnung eines erfindungsgemässen Polarisationsinterferometers dar, bei der die Verschiebungslänge x mittels eines Michelsonschen Interferometers mit beiden Lichtstrahlen ausserhalb der Anordnung gemessen wird.

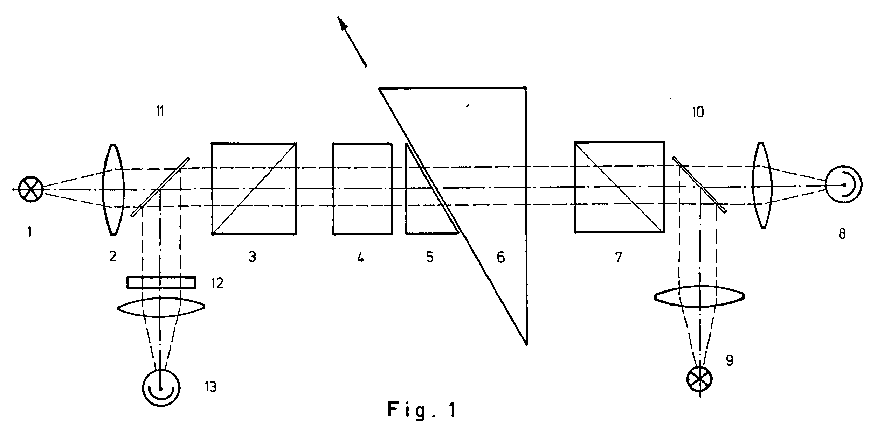

Die in Fig. 1 dargestellte Anordnung stellt die einfachste Ausführungsform des erfindungsgemässen Polarisationsinterferometers dar. Das Licht einer Lichtquelle 1 wird durch einen Kollimator 2 in einen parallelen Strahl verwandelt. Dieser wird durch einen ersten Polarisator 3 linear polarisiert. Danach geht er durch ein System bestehend aus drei doppelbrechenden Elementen 4,5,6. Das eine Element, das als Kompensator 4 bezeichnet wird, hat seine optische Achse gegenüber den beiden anderen doppelbrechenden Elementen 5,6 in der Ebene senkrecht zum Lichtstrahl um 9O Grad verdreht. Die zwei anderen doppelbrechenden Elemente sind zwei, längs entgegengesetzter Seitenflächen gegeneinander verschiebbar angeordnete, sich zu einem Quader ergänzende, optische Keile 5,6. Die Projektionen der optischen Achsen dieser beiden Heile 5,6 in die Ebene senkrecht zum parallelen Lichtstrahl stimmen überein und sind gemäss dem oben erwähnten Winkel gegenüber dem Kompensator 4 orientiert. Die voneinander abgewandten Seiten der beiden optischen Keile 5,6 stehen senkrecht im Lichtstrahl und die einander zugewandten Seiten sind parallel zueinander angeordnet.

Der eine der beiden Keile 6 kann in Richtung seiner Hypothenuse verschoben werden (Pfeilrichtung), wodurch der Gesamtweg des Lichtstrahls innerhalb der drei doppelbrechenden Elemente 4,5,6 kontinuierlich verstellbar wird. Eine mögliche Realisierung zur Verschiebung des Keils 6 besteht aus einer (nicht dargestellten) Spindel (mit konstanter Steigung), die durch einen Schrittmotor angetrieben wird. Die Spindel ist am feststehenden Teil des Schlittens, in Richtung der Hypothenuse des Keiles befestigt, die Mutter am beweglichen Teil. Wird der Schrittmotor mit Wechselstrom, konstanter Frequenz und Phase betrieben, kann das Interferogramm synchron dazu abgetastet werden (rapid scan method). Der Lichtstrahl durchquert hernach einen weiteren, zweiten Polarisator 7. Wenn der Lichtweg durch den Kompensator 4 genau gleich lang wie der Gesamtlichtweg durch die beiden optischen Keile 5,6 ist, wird die durch die Doppelbrechung erzeugte Verzögerung oder Verschnellerung des ausserordentlichen gegenüber dem ordentlichen Lichtstrahl genau aufgehoben und dies bewirkt, dass für den im folgenden angenommenen Fall senkrechter Polarisationsachsen der beiden Polarisatoren 3,7, kein Licht in den Photonendetektor 8 der in Fig. 1 dargestellten Anordnung dringt.

Misst man die Verschiebung des grossen optischen Keils 6 bezüglich dieses Punktes und verschiebt man den grossen optischen Keil 6 um die Länge x, so tritt durch die schon erwähnte Verzögerung des einen gegenüber dem anderen Lichtstrahl in den doppelbrechenden Elementen 4,5,6 eine Interferenz des ordentlichen mit dem ausserordentlichen Lichtstrahl auf. Das entsprechende Interferenzmuster S(x) ist gegeben durch

$$S(x) = \tfrac{1}{2} \int_{o}^{\infty} d\sigma I_L(\sigma) \eta_D(\sigma) \{1 - \cos(2\pi \Delta n \sin\alpha\sigma x)\} \qquad [1]$$

wobei $I_L(\sigma)$ das Spektrum der Lichtquelle und $\sigma$ die Wellenzahl gemessen in $cm^{-1}$ darstellt. $\eta_D(\sigma)$ beschreibt die spektrale Empfindlichkeit des Detektors 8, $\Delta n = n_e - n_o$ ist die Doppelbrechung, $n_e$ der ausserordentliche, $n_o$ der ordentliche Brechungsindex, und $\alpha$ der Keilwinkel gemäss Fig. 1.

Das Interferogramm S(x) wird nun für diskrete und aequidistante Heilverschiebungen $\Delta x$, erzeugt durch definierte Drehung der Spindel, gemessen und digitalisiert. Das daraus durch diskrete Fouriertransformation erhaltene Spektrum ist dann nach Abtasttheorem bis zur kleinsten Wellenlänge

$$\lambda_{min} = 2\Delta n \Delta x \sin\alpha \quad [2]$$

erhältlich, falls die Lichtquelle bis dort genügend Intensität hat und der Detektor dort empfindlich ist. Verschiebt man bei einem Michelsonschen Interferometer den beweglichen Spiegel jeweils um die Länge $\Delta x$, so hat das Abtasttheorem die Form

$$\lambda_{min} = 2\Delta x \quad [3]$$

Für einen Quarzkeil mit $\alpha = 30°$ und $\Delta n \sim 10^{-2}$ ergibt sich aus Formel [2]

$$\lambda_{min} = 10^{-2} \Delta x \quad [4]$$

Das heisst man kann mit einem Quarzkeil bei gleicher Schrittgrösse $\Delta x$ ein Spektrum bis zu einer gegenüber der bekannten Michelsonschen Anordnung 200 mal kleineren Wellenlänge messen.

Die Messung der Verschiebungslänge x, bzw. der diskreten Schrittlänge x, wird bei dieser Ausführungsform durch eine zusätzliche Anordnung erreicht. Diese besteht aus einer monochromatischen Lichtquelle 9, welche einen Lichtstrahl emittiert, deren Wellenlänge $\lambda_o$ kleiner als die kleinste Wellenlänge des zu messenden Spektralbereiches sein muss. Der Lichtstrahl wird an einem Strahlteiler 10 reflektiert, so dass er nun, parallel zum Messstrahl, die Anordnung 3 - 7 in entgegengesetzter Richtung durchläuft, hernach von einem weiteren Strahlteiler 11 durch ein für seine Wellenlänge, nicht aber für die Wellenlängen des zu messenden Spektralbereichs, durchlässiges Filter 12 auf einen Detektor 13 trifft. Für die Abhängigkeit D(x) des Detektorsignals von der Verschiebung x ergibt sich nach [1], unter der Annahme einer monochromatischen Lichtquelle der Wellenzahl $\sigma_o$

$$I_L(\sigma) = I_o \delta(\sigma - \sigma_o) \quad [5]$$

die Formel

$$D(x) = A \sin^2 Bx \quad [6]$$

mit

$$A = I_o \eta_D(\sigma_o) \quad [7]$$

$$B = \pi \Delta n \sin\alpha\sigma_o \quad [8]$$

Die diskrete und äquidistante Abtastung des Signals S(x) erfolgt nun bei jedem Extremalwert oder jedem Punkt grösster Steigung von $\sin^2 Bx$, was einer Schrittlänge von

$$\Delta x = 1 / (2\Delta n \sin\alpha\sigma_o) \quad [9]$$

entspricht.

Die Anordnung gemäss Fig. 1 kann auch derart modifiziert werden, dass der monochromatische Strahl vor dem ersten polarisierenden Element 3 mittels eines ersten Strahlteilers 11 in den Messstrahl eingekoppelt wird und nach dem zweiten polarisierenden Element 7 mit einem zweiten Strahlteiler 10 ausgekoppelt wird und auf einen Photonendetektor geführt wird.

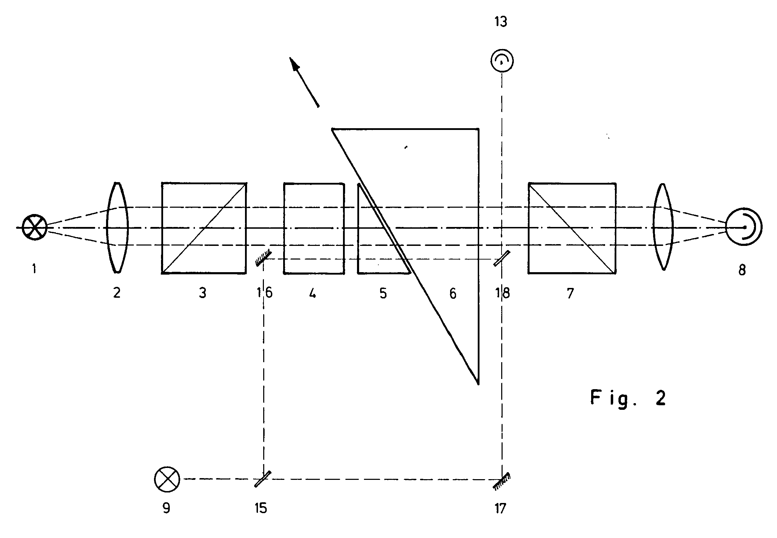

In der in Fig. 2 dargestellten Anordnung erfolgt die Längenmessung wiederum mit einem monochromatischen Lichtstrahl 9 der Wellenlänge $\lambda_o$. Dieser wird am Strahlteiler 15 in zwei Strahlen aufgeteilt. Der eine Strahl setzt seinen Weg zum Spiegel 17 fort, an dem er in Richtung zum Strahlteiler 18 reflektiert und durch diesen zum Detektor 13 gelangt. Der andere wird am Spiegel 16 reflektiert, durchquert die doppelbrechenden Elemente 4,5,6, und erreicht über den Strahlteiler 18 den Detektor 13. Für das entsprechende Detektorsignal kann man die Formeln [6]-[8] benützen, wobei in Formel [8] die Doppelbrechung $\Delta n$ durch $n_e - 1$ zu ersetzen ist; $n_e$ ist hier der ausserordentliche Brechungsindex und es wird angenommen, dass der monochromatische Strahl 9 linear polarisiert ist mit Polarisationsrichtung senkrecht zur Zeichenebene und dass diese Richtung dieselbe ist wie die Richtung der optischen Achsen der beiden Keile 5,6. Die entsprechende Schrittlänge ist dann

$$\Delta x = 1 / \{2(n_e - 1)\sin\alpha \, \sigma_o\} \quad [10]$$

Für Quarz mit $n \sim 10^{-2}$ und $n_e \sim 1{,}5$ ergibt sich eine circa 5O mal kleinere Schrittlänge als in Formel [9] und deshalb nach Formel [2] einen 5O mal weiteren messbaren Spektralbereich.

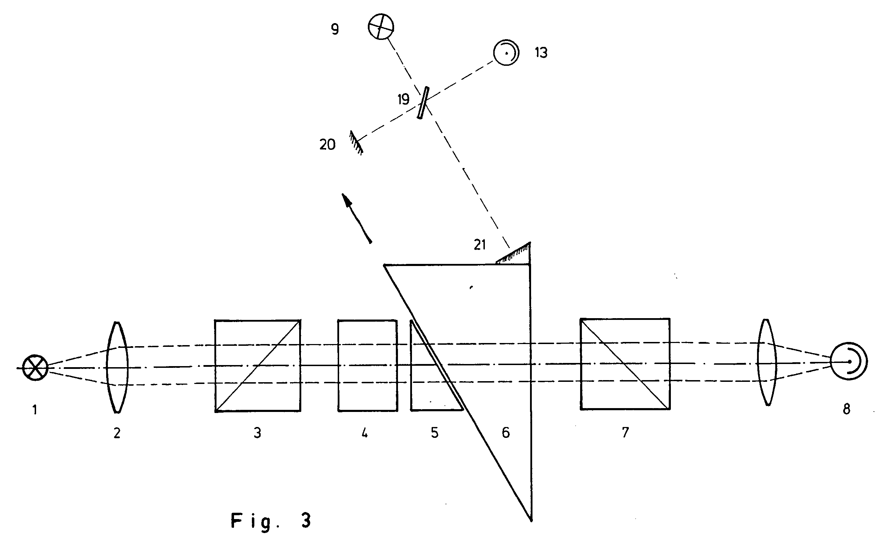

In der in Fig. 3 dargestellten Anordnung erfolgt die Längenmessung mit einem monochromatischen Lichtstrahl 9 der Wellenlänge $\lambda_o$ dessen Interferenz durch ein Michelson Interferometer 9, 13,19,20,21 erzeugt wird, dessen beweglicher Spiegel 21 fest mit dem beweglichen Keil 6 verbunden ist. Für $\Delta x$ ergibt sich dann

$$\Delta x = 1 / (2 \sigma_o) \qquad [11]$$

was eine Erweiterung des Spektralbereichs um circa einen Faktor 4 gegenüber Formel [1O] bedeutet.

Der bei sämtlichen Ausführungsformen gemäss den Fig. 1 bis 3 verwendete Photonendetektor 8 besteht zum Beispiel aus einer Bleisulfidzelle oder einer Siliziumphotodiode. Der im Photonendetektor 8 erzeugte Strom kann verstärkt und mittels eines nicht dargestellten Analog/Digital-Wandlers in ein numerisches Interferogramm umgewandelt werden, das digital weiterverarbeitet werden kann. Durch FFT (Fast Fourier Transformation) wird schliesslich ein interpretierbares Spektrum erhalten.

**Patentansprüche**

1. Polarisationsinterferometer mit einer Lichtquelle (1), einem Kollimator (2) zur Erzeugung eines parallelen Lichtstrahles, einem ersten polarisierenden Element (3), welches den parallelen Lichtstrahl polarisiert, einem doppelbrechenden Element (4,5,6) mit mindestens zwei planparallelen Seitenflächen, welche senkrecht zum parallelen, polarisierten Lichtstrahl stehen und einem zweiten polarisierenden Element (7), welches das aus dem doppelbrechenden Element (4,5,6) austretende Licht polarisiert und einem Photonendetektor (8) zuführt, dadurch gekennzeichnet,

   A) dass das doppelbrechende Element (4,5,6) aus zwei, längs entgegengesetzter Seitenflächen gegeneinander verschiebbar angeordneten, sich zu einem Quader ergänzenden, optischen Keile (5,6) und einer als Kompensator dienenden doppelbrechenden planparallelen Platte (4) besteht,

   B) dass die optische Achse des Kompensators (4) gegenüber derjenigen der beiden Keile (5,6) in der Ebene senkrecht zum Lichtstrahl um einen endlichen Winkel verdreht ist,

   C) dass die optischen Achsen der beiden Keile (5,6) übereinstimmen,

   D) dass die Polarisations-Achsen der beiden Polarisatoren (3,7) senkrecht oder parallel zueinander stehen und nicht parallel zu den optischen Achsen der beiden Keile (5,6) des doppelbrechenden Elementes (4,5,6) ausgerichtet sind, und

   E) ein monochromatischer Lichtstrahl (9) in den von der Lichtquelle (1) erzeugten parallen Lichtstrahl eingekoppelt wird und nach Durchquerung mindestens des doppelbrechenden Elementes (4,5,6) wieder ausgekoppelt wird und auf einen Photonendetektor (13) geführt wird.

2. Polarisationsinterferometer nach Anspruch 1, dadurch gekennzeichnet, dass ein monochromatischer Strahl (9) hinter dem zweiten polarisierenden Element (7) mittels eines ersten Strahlteilers (10) in entgegengesetzter Richtung in den Messstrahl eingekoppelt wird und vor dem ersten polarisierenden Element (3) mit einem zweiten Strahlteiler (11) ausgekoppelt wird und auf einen Photonendetektor (13) geführt wird.

3. Polarisationsinterferometer nach Anspruch 1, dadurch gekennzeichnet, dass ein monochromatischer Strahl vor dem ersten polarisierenden Element (3) mittels eines ersten Strahlteilers (11) in den Messstrahl eingekoppelt wird und nach dem zweiten polarisierenden Element (7) mit einem zweiten Strahlteiler (10) ausgekoppelt wird und auf einen Photonendetektor geführt wird.

4. Polarisationsinterferometer nach Anspruch 2 oder 3, dadurch gekennzeichnet, dass vor dem Photonendetektor (13) ein optisches Bandpassfilter (12) der Wellenlänge des monochromatischen Strahles angeordnet ist.

5. Polarisationsinterferometer nach einem der Anspruch 1, dadurch gekennzeichnet, dass ein paralleler monochromatischer Lichtstrahl (9) an einem Strahlteiler (15) in zwei Strahlen aufgeteilt wird, wobei der erste Strahl mittels eines zwischen dem ersten polarisierenden Element (3) und dem Kompensator (4) angeordneten Spiegels (16) in den Strahlengang des doppelbrechenden Elementes (4,5,6) eingekoppelt wird und der zweite Strahl mittels des Spiegels (17) zu einem zwischen dem doppelbrechenden Elemente (4,5,6) und dem zweiten polarisierenden Element (7) angeordneten Strahlteiler (18) reflektiert wird und die beiden reflektierten Strahlen beim Strahlteiler (18) wieder zusammentreffen und hernach aus dem Strahlengang ausgekoppelt und auf einen Detektor (13) geführt werden.

6. Polarisationsinterferometer nach einem der Ansprüche 1 bis 5, dadurch gekennzeichnet, dass die optische Achse des Kompensators (4) gegenüber derjenigen der beiden Keile (5,6) in der Ebene senkrecht zum Lichtstrahl um 90 Grad verdreht ist.

7. Polarisationsinterferometer nach einem der Ansprüche 1 - 6, dadurch gekennzeichnet, dass die optischen Achsen der beiden Polarisatoren (3,7) einen Winkel von 45 Grad zu den Achsen der beiden Keile (5,6) des doppelbrechenden Elementes (4,5,6) aufweisen.

8. Polarisationsinterferometer nach einem der Ansprüche 1 - 7, dadurch gekennzeichnet, dass die Polarisationsrichtung des polarisierenden Strahlteilers (3) einen Winkel von 45 Grad zu den Achsen der beiden Keile (5,6) des doppelbrechenden Elementes (4,5,6) aufweist.

9. Polarisationsinterferometer nach einem der Ansprüche 1 bis 8, dadurch gekennzeichnet, dass der bewegliche Keil (6) des doppelbrechenden Elementes (4,5,6) mit dem beweglichen Spiegel (21) eines Michelson Interferometers (9,13,19,20,21) fest verbunden ist.

10. Interferometer nach einem der Ansprüche 1 bis 9, dadurch gekennzeichnet, dass dem beweglichen Keil (6) des doppelbrechenden Elementes (4,5,6) ein Massstab zur Messung der Längenverschiebung x des Keiles (6) zugeordnet ist.

11. Interferometer nach einem der Ansprüche 1 bis 10, dadurch gekennzeichnet, dass dem beweglichen Keil (6) des doppelbrechenden Elementes (4,5,6) ein Beugungsgitter zur Messung der Längenverschiebung x des Keiles (6) nach der MoireStreifenmethode zugeordnet ist.

12. Polarisationsinterferometer nach einem der Ansprüche 1 bis 11, dadurch gekennzeichnet , dass der nach dem zweiten polarisierenden Element (7) angeordnete Photonendetektor (8) eine Bleisulfidzelle oder eine Siliziumphotodiode ist.

13. Verwendung des Polarisationsinterferometers nach einem der Ansprüche 1 bis 12, dadurch gekennzeichnet, dass der im Photonendetektor (8) erzeugte Strom durch eine elektronische Schaltung verstärkt wird und mittels eines Analog/Digital-Wandlers zu aequidistante Verschiebungspunkten in ein diskretes numerisches Interferogramm umgewandelt wird.

14. Verwendung nach Anspruch 13, dadurch gekennzeichnet, dass das numerische Interferogramm digital gefiltert wird und nach einer FFT (Fast Fourier Transformation) als Spektrogramm dargestellt wird.

Fig. 1

EP 0 605 391 A2

Fig. 2

EP 0 605 391 A2

Fig. 3